(19) Europäisches Patentamt / European Patent Office / Office européen des brevets

(11) EP 2 707 423 B1

(12) **EUROPEAN PATENT SPECIFICATION**

(45) Date of publication and mention of the grant of the patent:
**10.04.2019 Bulletin 2019/15**

(21) Application number: **12725183.3**

(22) Date of filing: **11.05.2012**

(51) Int Cl.:
***C08J 5/18*** *(2006.01)*

(86) International application number:
**PCT/US2012/037603**

(87) International publication number:
**WO 2012/155083 (15.11.2012 Gazette 2012/46)**

# (54) AMORPHOUS POLYETHERIMIDE FILMS FOR CAPACITORS, METHODS OF MANUFACTURE, AND ARTICLES MANUFACTURED THEREFROM

AMORPHE POLYETHERIMIDFILME FÜR KONDENSATORE, VERFAHREN ZU IHRER HERSTELLUNG UND DARAUS HERGESTELLTE ARTIKEL

FILMS DE POLYÉTHERIMIDE AMORPHE POUR DES CONDENSATEURS, MÉTHODES POUR LEUR FABRICATION ET ARTICLES FABRIQUÉS À PARTIR DE CES DERNIERS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2011 US 201161485285 P**

(43) Date of publication of application:
**19.03.2014 Bulletin 2014/12**

(73) Proprietor: **SABIC Global Technologies B.V.**
**4612 PX Bergen op Zoom (NL)**

(72) Inventors:
- **CHOATE, Kim R.**
  **Pittsfield**
  **Massachusetts 01201 (US)**
- **SILVI, Norberto**
  **Niskayuna**
  **New York 12309 (US)**
- **CHEN, Qin**
  **Niskayuna**
  **New York 12309 (US)**
- **MC TIGUE, Robert Colin**
  **Niskayuna**
  **New York 12309 (US)**

(74) Representative: **Office Freylinger**
**P.O. Box 48**
**8001 Strassen (LU)**

(56) References cited:
**EP-A2- 0 984 030** **US-A- 5 260 407**

- **IRWIN P C; TAN D Q; CAO Y; SILVI N; CARTER M; RUMLER M; GARET C: "Development of high temperature capacitors for high density, high temperature applications", SAE INTERNATIONAL JOURNAL OF AEROSPACE, vol. 1, no. 1, 1 January 2009 (2009-01-01) , pages 817-821, XP009161293,**
- **DATABASE WPI Week 199613 Thomson Scientific, London, GB; AN 1996-123665 XP002680251, & JP 8 020060 A (MITSUBISHI PLASTICS IND LTD) 23 January 1996 (1996-01-23)**
- **DATABASE WPI Week 200881 Thomson Scientific, London, GB; AN 2008-N93509 XP002680252, & JP 2008 274023 A (NIPPON GE PLASTICS KK) 13 November 2008 (2008-11-13)**
- **DATABASE WPI Week 199332 Thomson Scientific, London, GB; AN 1993-252232 XP002680253, & JP 5 169526 A (MITSUI TOATSU CHEM INC) 9 July 1993 (1993-07-09)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

This disclosure relates to polymer films, and in particular to amorphous polyetherimide films useful for the manufacture of capacitors.

Electrostatic film capacitors with high volumetric energy density, high operating temperature, and long lifetime are critical components for pulse-power, automotive, and industrial electronics. Capacitors are essentially energy-storing devices having two parallel conductive plates separated by a thin layer of an insulating (dielectric) film. When a voltage is applied across the plates, the electric field in the dielectric displaces electric charges, and thus stores energy. The amount of energy stored by a capacitor depends on the dielectric constant of the insulating material and the dimensions (total area and thickness) of the film, such that in order to maximize the total amount of energy that a capacitor can accumulate, the dielectric constant and breakdown voltage of the film are maximized, and the thickness of the film minimized. Because the physical characteristics of the dielectric material in the capacitor are the primary determining factors for the performance of a capacitor, improvements in one or more of the physical properties of the dielectric material in a capacitor can result in corresponding performance improvements in the capacitor component, usually resulting in performance and lifetime enhancements of the electronics system or product in which it is embedded.

Electrostatic film capacitors made from biaxially-oriented poly(propylene) (BOPP) have been used in applications requiring a low dissipation factor, high insulation resistance and low dielectric absorption, such as in electrical appliances, electronic equipment, oven and furnaces, refrigerators, automobiles, and home appliances. The low dielectric constant (Dk), which is about 2.2, and the maximum service temperature of about 100°C limits the use of these capacitors in applications requiring high operating temperatures and/or high energy densities. Poly(ethylene terephthalate (PET) and poly(carbonate) (PC) films have a higher dielectric constant than BOPP films (about 3.0), but capacitors made from these films can only be used at operating temperatures as high as about 125°C. Polyetherimide films manufactured by solvent casting can have a dielectric constant of about 3.2 and operating temperatures as high as about 200°C. The solvent-casting process requires use of solvents that increase the manufacturing cost of the films, as well as films that can have small amounts of solvent entrained therein.

IRWIN P C; TAN D Q; CAO Y; SILVI N; CARTER M; RUMLER M; GARET C: "Development of high temperature capacitors for high density, high temperature applications", SAE INTERNATIONAL JOURNAL OF AEROSPACE, vol. 1, no. 1, 1 January 2009 (2009-01-01), pages 817-821, describes articles, capacitors and electronic devices made out of a commercially available, 13 micrometer thick thermoplastic polyetherimide (PEI).

JP8020060A2 proposes to produce a polyetherimide film which has an extremely reduced content of foreign matters having a uniform thickness and good appearance. The polyetherimide film is produced by a method wherein a polyetherimide with a water content of less 100 ppm is filtered and extruded to a casting roll held at 140-220°C in film form in a molten state and the film is extruded by nip rolls having elastic surfaces which are brought in contact with the casting roll under pressure.

There accordingly remains a need in the art for new films and methods for their manufacture that can produce films of very high purity and with excellent electrical properties, in particular high breakdown strength and high dielectric constant. It would be a further advantage if such films could operate at high temperature. There remains a further need for efficient methods for producing such films that are amendable to industrial scale processes. It would be further advantage if such methods were environmentally friendly.

SUMMARY OF THE INVENTION

The invention relates to a uniaxially-stretched, solventless extruded film comprising a polyetherimide of the formula

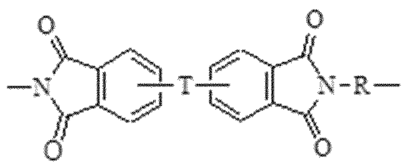

wherein

T is -O- or a group of the formula -O-Z-O- wherein the divalent bonds of the -O- or the -O-Z-O- group are in the 3,3', 3,4', 4,3', or the 4,4' positions and Z is a divalent radical of the formulae

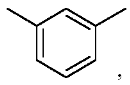, 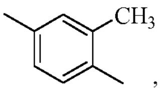, 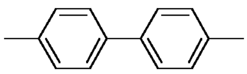, 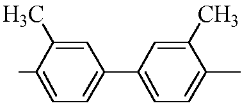, 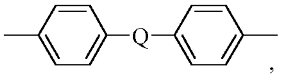,

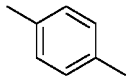, 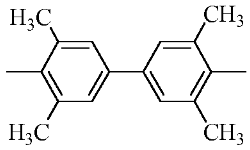, 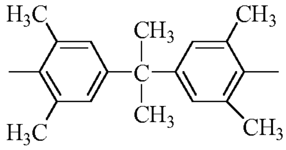, or 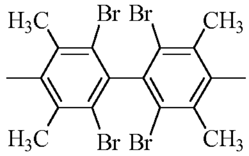,

wherein Q is -O-, -S-, -C(O)-, $-SO_2-$, -SO-, or $-C_yH_{2y}-$ wherein y is an integer from 1 to 5; and R is m-phenylene; and less than 5 weight percent of fluorine, wherein the film has at least one wrinkle-free region having a surface roughness average of less than +/- 3% of the average thickness of the film as measured by optical profilometry, and having a first surface and a second surface, the at least one extruded wrinkle-free region comprising:

a thickness of less than 7 micrometers, and
a variation of the thickness of the film of +/-10% or less of the thickness of the film, and; further wherein the film has:

a dielectric constant at 1 kHz and room temperature of at least 2.7;
a dissipation factor at 1 kHz and room temperature of 1% or less; and
a breakdown strength of at least 300 Volts/micrometer.

Articles comprising the above films are also disclosed.

In another embodiment, the invention relates to metallized uniaxially-stretched, extruded films.

In another embodiment, the invention relates to capacitors made from metallized uniaxially-stretched, extruded films.

In another embodiment, our invention relates to an electronic article comprising the capacitors made from wound metallized uniaxially-stretched extruded film.

DETAILED DESCRIPTION OF THE INVENTION

The present inventors have discovered that polyetherimide substrate films for electrostatic capacitors having excellent properties can be manufactured in a solventless process by extrusion. In a surprising and important feature, the extruded films can have large wrinkle-free regions. The wrinkle-free regions are sufficiently smooth and flat such that the substrate film can be metallized to provide a metallized film having a breakdown strength of at least 300 Volts/micrometer. The wrinkle-free regions are sufficiently smooth and flat such that the substrate film can be metallized to provide a metallized film of substantially uniform breakdown strength across the region.

In particular, the wrinkle-free regions have a thickness of more than 0 to 13, where any variation of the thickness of the film is +/-10% of the thickness of the film, and the surface roughness of the film is less than 3% of the average thickness of the film. The films provide both an increase in the capacitor dielectric constant and dielectric breakdown strength compared to prior art films, while retaining other advantageous physical and electrical characteristics, such as flexibility, thinness, and dielectric constant stability. In particular, the films can have a high voltage breakdown strength (at least 300 Volts/micrometer), a high dielectric constant (greater than 2.7) and a low dissipation factor (less than 1%). The films further can have a dielectric constant that is stable up to 150°C. The films and capacitors made from the films accordingly offer advantages over current materials and methods for the manufacture of components for the electronics industry. A particular advantage is that the films can be reliably manufactured on industrial scale in a solventless process. Removal of solvent from solvent-case films can be difficult. The extruded films herein are processed without solvent, providing both a cost and a manufacturing advantage. In another embodiment, the extruded films are more than 0 and less than or equal to 7 microns.

Various numerical ranges are disclosed in this patent application. Because these ranges are continuous, they include every value between the minimum and maximum values. Unless expressly indicated otherwise, the various numerical ranges specified in this application are approximations. The endpoints of all ranges directed to the same component or property are inclusive of the endpoint and independently combinable.

All molecular weights in this application refer to weight average molecular weights unless indicated otherwise. All such mentioned molecular weights are expressed in Daltons.

The terms "a" and "an" do not denote a limitation of quantity, but rather denote the presence of at least one of

the referenced item. As used herein, "combination thereof" is inclusive of one or more of the recited elements, optionally together with a like element not recited. Reference throughout the specification to "an embodiment," "another embodiment," "an embodiment," "some embodiments," and so forth, means that a particular element (e.g., feature, structure, property, and/or characteristic) described in connection with the embodiment is included in at least an embodiment described herein, and can or cannot be present in other embodiments. In addition, it is to be understood that the described element(s) can be combined in any suitable manner in the various embodiments.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. The term "alkyl" includes both $C_{1-30}$ branched and straight chain, unsaturated aliphatic hydrocarbon groups having the specified number of carbon atoms. Examples of alkyl include, but are not limited to, methyl, ethyl, n-propyl, i-propyl, n-butyl, s-butyl, t-butyl, n-pentyl, s-pentyl, n- and s-hexyl, n-and s-heptyl, and, n- and s-octyl. The term "aryl" means an aromatic moiety containing the specified number of carbon atoms, such as to phenyl, tropone, indanyl, or naphthyl.

All ASTM tests are based on the 2003 edition of the Annual Book of ASTM Standards unless otherwise indicated.

The polyetherimide can be a polyetherimide or a polyetherimide sulfone. The polyetherimide compositions used to form the films comprise a polyetherimide of formula (1)

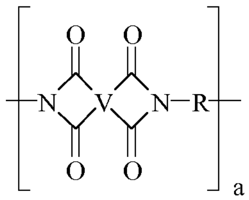

(1)

wherein a is greater than 1, for example 10 to 1,000 or more, or more specifically 10 to 500.

The group V in formula (1) is a tetravalent linker having an ether group, an arylene sulfone group, or a combination of an ether group and an arylene sulfone group. (For convenience, the term "polyetherimide" as used herein includes polyetherimide sulfones.) Such linkers include but are not limited to: (a) substituted or unsubstituted, saturated, unsaturated or aromatic monocyclic, and polycyclic groups having 5 to 50 carbon atoms, substituted with an ether group or a combination of an ether group and an arylene sulfone group; and (b) substituted or unsubstituted, linear or branched, saturated or unsaturated alkyl groups having 2 to 30 carbon atoms and substituted with an ether group or a combination of an ether group and an arylene sulfone group. Exemplary additional substitutions include, but are not limited to, amides, esters, and combinations comprising at least one of the foregoing.

The R group in formula (1) includes but is not limited to substituted or unsubstituted divalent organic group having 2 to 20 carbon atoms such as: (a) an aromatic hydrocarbon groups having 6 to 20 carbon atoms and halogenated derivatives thereof; (b) straight or branched chain alkylene groups having 2 to 20 carbon atoms; (c) cycloalkylene groups having 3 to 20 carbon atoms, or (d) divalent groups of formula (2)

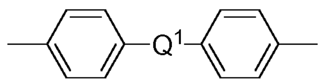

(2)

wherein $Q^1$ includes but is not limited to a divalent moiety such as -O-, -S-, -C(O)-, $-SO_2-$, - SO-, $-C_yH_{2y}-$ (y being an integer from 1 to 5), and halogenated derivatives thereof, including perfluoroalkylene groups.

In an embodiment, linkers V include but are not limited to tetravalent aromatic groups of formula (3)

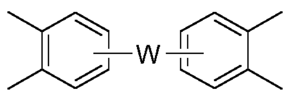

(3)

wherein W is a divalent moiety selected from -O- -O-Z-O-, $-SO_2-$, or a combination thereof, wherein the divalent bonds of the -O-, -O-Z-O-, and $-SO_2-$ group are in the 3,3', 3,4', 4,3', or the 4,4' positions, and wherein Z is a monocyclic or polycyclic moiety having 6 to 24 carbon atoms and optionally substituted with 1 to 6 $C_{1-8}$ alkyl groups, 1 to 8 halogen atoms, or a combination thereof, provided that the valence of Z is not exceeded. Examples of Z groups include, but are not limited, to divalent groups of formulas (4)

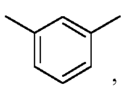, 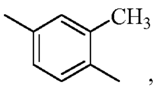, 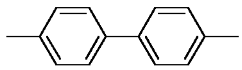, 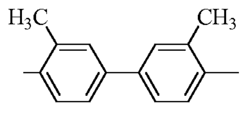, 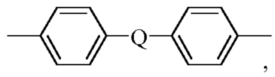,

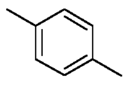, 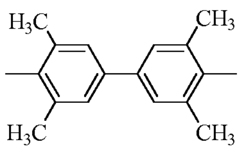, 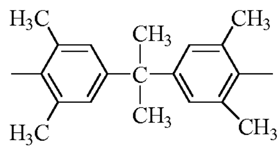, or 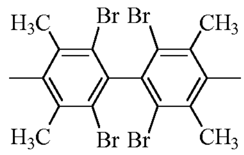,

(4)

wherein Q includes but is not limited to a divalent moiety including -O-, -S-, -C(O)-, $-SO_2-$, - SO-, $-C_yH_{2y}-$ (y being an integer from 1 to 5), and halogenated derivatives thereof, including perfluoroalkylene groups.

In a specific embodiment, a is greater than 1; V is a tetravalent aromatic group of formula (3) wherein W is a divalent moiety selected from -O- -O-Z-O-, or a combination thereof, wherein the divalent bonds of the -O- or the -O-Z-O- group are in the 3,3', 3,4', 4,3', or the 4,4' positions, and wherein Z is a monocyclic or polycyclic moiety having 6 to 24 carbon atoms and optionally substituted with 1 to 8 $C_{1-8}$ alkyl groups, 1 to 8 halogen atoms, or a combination thereof; and R is selected from an aromatic hydrocarbon group having 6 to 20 carbon atoms, a halogenated derivative thereof, a straight or branched chain alkylene group having 2 to 20 carbon atoms, a cycloalkylene group having 3 to 20 carbon atoms, or a divalent group of the formula (2) wherein $Q^1$ is -O-, -S-, -C(O)-, $-SO_2-$, -SO-, $-C_yH_{2y}-$wherein y is 1 to 5, and a halogenated derivative thereof.

In another specific embodiment, the polyetherimide comprises more than 1, specifically 10 to 1,000, or more specifically, 10 to 500 structural units, of formula (5)

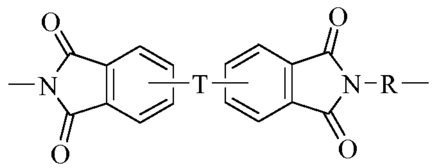

(5)

wherein T is -O- or a group of the formula -O-Z-O- wherein the divalent bonds of the -O- or the -O-Z-O- group are in the 3,3', 3,4', 4,3', or the 4,4' positions; Z is a divalent group of formula (4) as defined above; and R is a divalent group of formula (2) as defined above. In a specific embodiment, R is m-phenylene.

In another specific embodiment, the polyetherimide is polyetherimide sulfone comprising ether groups and sulfone groups wherein at least 50 mole % of the linkers V and the groups R in formula (1) comprise a divalent arylene sulfone group. For example, all linkers V, but no groups R, can contain an arylene sulfone group; or all groups R but no linkers V can contain an arylene sulfone group; or an arylene sulfone can be present in some fraction of the linkers V and R groups, provided that the total mole fraction of V and R groups containing an aryl sulfone group is greater than or equal to 50 mole %.

Even more specifically, the polyetherimide sulfone can comprise more than 1, specifically 10 to 1,000, or more specifically, 10 to 500 structural units of formula (6)

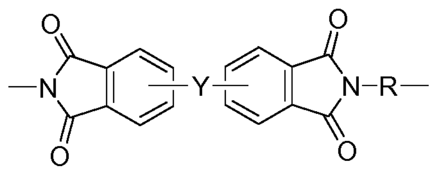

(6)

wherein Y is -O-, $-SO_2-$, or a group of the formula -O-Z-O- wherein the divalent bonds of the -O-, $SO_2-$, or the -O-Z-O- group are in the 3,3', 3,4', 4,3', or the 4,4' positions, wherein Z is a divalent group of formula (3) as defined above and R is a divalent group of formula (2) as defined above, provided that greater than 50 mole % of the sum of moles Y + moles R in formula (2) contain $-SO_2-$ groups. In a specific embodiment, R is m-phenylene, p-phenylene diarylsulfone, or a combination thereof.

It is to be understood that the polyetherimides can optionally comprise linkers V that do not contain ether or ether and sulfone groups, for example linkers of formula (7).

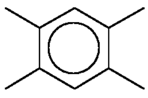
,
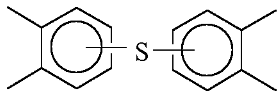
, and
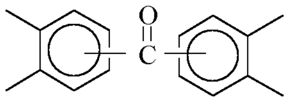
(7).

Imide units containing such linkers are generally present in amounts ranging from 0 to 10 mole % of the total number of units, specifically 0 to 5 mole %. In an embodiment no additional linkers V are present in the polyetherimides. In another specific embodiment, the polyetherimide comprises 10 to 500 structural units of formula (5) and the polyetherimide sulfone contains 10 to 500 structural units of formula (6).

The polyetherimides can be prepared by various methods, including, but not limited to, the reaction of a bis(phthalimide) of formula (8):

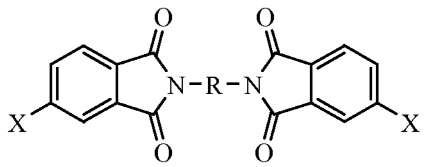
(8)

wherein R is as described above and X is a nitro group or a halogen. Bispthalimides of formula (8) can be formed, for example, by the condensation of the corresponding anhydride of formula (9)

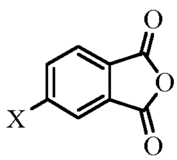
(9)

wherein X is a nitro group or halogen, with an organic diamine of the formula (10)

$$H_2N\text{-}R\text{-}NH_2 \qquad (10)$$

wherein R is as described above.

Illustrative examples of amine compounds of formula (10) include: ethylenediamine, propylenediamine, trimethylenediamine, diethylenetriamine, triethylenetetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(b-amino-t-butyl) toluene, bis(p-b-amino-t-butylphenyl) ether, bis(p-b-methyl-o-aminophenyl) benzene, bis(p-b-methyl-o-aminopentyl) benzene, 1, 3-diamino-4-isopropylbenzene, bis(4-aminophenyl) ether and 1,3-bis(3-aminopropyl) tetramethyldisiloxane. Mixtures of these amines can be used. Illustrative examples of amine compounds of formula (10) containing sulfone groups include but are not limited to, diamino diphenyl sulfone (DDS) and bis(aminophenoxy phenyl) sulfones (BAPS). Combinations comprising any of the foregoing amines can be used.

Specifically, the polyetherimides can be synthesized by the reaction of the bis(phthalimide) of formula (8) with an alkali metal salt of a dihydroxy substituted aromatic hydrocarbon of the formula HO-V-OH wherein V is as described above, in the presence or absence of a phase transfer catalyst. Suitable phase transfer catalysts are disclosed in U.S. Patent No. 5,229,482. Specifically, the dihydroxy substituted aromatic hydrocarbon is a bisphenol such as bisphenol A, or a combination of an alkali metal salt of a bisphenol and an alkali metal salt of another dihydroxy substituted aromatic hydrocarbon can be used.

In an embodiment, the polyetherimides comprises structural units of formula (5) wherein each R is independently p-phenylene or m-phenylene or a mixture comprising at least one of the foregoing; and T is group of the formula -O-Z-O- wherein the divalent bonds of the -O-Z-O- group are in the 3,3', 3,4', and/or 4,4' positions, and Z is 2,2-diphenylenepropane group (a bisphenol A group). Further, the polyetherimide sulfone comprises structural units of formula (6) wherein at least 50 mole % of the R groups are of formula (4) wherein Q is $-SO_2-$ and the remaining R groups are independently p-phenylene or m-phenylene or a combination comprising at least one of the foregoing; and T is group of the formula -O-Z-O- wherein the divalent bonds of the -O-Z-O- group are in the 3,3' positions, and Z is a 2,2-diphenylenepropane group.

A polyetherimide without sulfone groups and a polyetherimide sulfone can be used alone or in combination. In an embodiment, only a polyetherimide without sulfone groups is used. In another embodiment, the weight ratio of polyetherimide without sulfone groups: polyetherimide sulfone can be from 99:1 to 50:50.

The polyetherimides have a weight average molecular weight (Mw) of 20,000 to 400,000 Daltons as measured by gel permeation chromatography (GPC) using polystyrene standards. In some embodiments the Mw can be 10,000 to 80,000 Daltons.

The polyetherimides can have an intrinsic viscosity greater than or equal to 0.2 deciliters per gram (dl/g) as measured in m-cresol at 25°C. Within this range the intrinsic viscosity can be 0.35 to 1.0 dl/g, as measured in m-cresol at 25°C.

The polyetherimides have a glass transition temperature of greater than 135°C, or greater than 150°C, for example 135°C to 500°C, as measured using differential scanning calorimetry (DSC) per ASTM test D3418. In some embodiments the polyetherimide, and in particular a polyetherimide has a glass transition temperature of 135°C to 350°C.

The polyetherimides can have a molecular weight ranging from 20,000 to 60,000 weight average, based on polystyrene standard.

The polyetherimides can have a melt flow index of 1 to 80 grams per 10 minute (g/10 min), as measured by American Society for Testing Materials (ASTM) D1238-04 at 295 to 370°C, using a 6.7 kilogram (kg) weight.

The inventors hereof have found that in order to produce the wrinkle-free films, particularly in roll form as described below, the polyetherimide film forming compositions (and thus the films) contain less than 5 wt. % of fluorine, specifically less than 4 wt. %, less than 3 wt. %, less than 2 wt. %, less than 1 wt. %, each based on the total weight of the composition. As shown in the Examples the presence of fluorine tends to decrease the dielectric breakdown strength of the polymer and the corresponding film made from the polymer.

Thus, the polyetherimide film-forming compositions and films contain less than 1000 ppm, specifically less than 750 ppm, less than 500 ppm, or less than 50 ppm by weight of a fluorine-containing compound. In an embodiment, no fluorine-containing compound is present in the film-forming composition. Such compounds include, without limitation, certain mole release agents, fillers (e.g., particulate PTFE), or flame retardants.

Similarly it has been found that in order to produce the wrinkle-free films, particularly in roll form as described below, the polyetherimide film-forming compositions (and thus the films) contain less than 1000 ppm, specifically less than 750 ppm, less than 500 ppm, or less than 50 ppm by weight of a silicone compound. In an embodiment, no silicone compound is present in the film-forming composition or film. Such silicone compounds include, without limitation, silicone oils and polydimethyl siloxanes.

Even more specifically, the polyetherimide film-forming compositions and films contain less than 1000 ppm, specifically less than 750 ppm, less than 500 ppm, or less than 50 ppm by weight of both a fluorine-containing compound and a silicone compound. In an embodiment, no fluorine-containing compound and no silicone compound is present in the film-forming compositions or films.

Good electrical properties are obtained when the polyetherimide film-forming compositions and films contain low levels of certain metal ions. Thus, the film-forming compositions and films contain less than 50 ppm, specifically less than 40 ppm, 30 ppm or 20 ppm by weight of each of aluminum, calcium, magnesium, iron, nickel, potassium, manganese, molybdenum, sodium, titanium, and zinc.

In some embodiments it is desired to use polyetherimide film-forming compositions and films that are essentially free of bromine and chlorine. "Essentially free" of bromine and chlorine means that the composition has less than 3 wt. % of bromine and chlorine, and in other embodiments less than 1 wt. % bromine and chlorine by weight of the film-forming composition. In other embodiments, the composition is halogen free. "Halogen free" is defined as having a halogen content (total amount of fluorine, bromine, chlorine, and iodine) of less than or equal to 1000 parts by weight of halogen per million parts by weight of the total composition (ppm). The amount of halogen can be determined by

ordinary chemical analysis such as atomic absorption.

The polyetherimide film-forming compositions can optionally further comprise one or more particulate fillers to adjust the properties thereof, for example dielectric constant, coefficient of thermal expansion, and the like. Exemplary particulate fillers include silica powder, such as fused silica and crystalline silica; boron-nitride powder and boron-silicate powders; alumina, and magnesium oxide (or magnesia); silicate spheres; flue dust; cenospheres; aluminosilicate (armospheres); natural silica sand; quartz; quartzite; titanium oxide, barium titanate, barium strontium, tantalum pentoxide, tripoli; diatomaceous earth; synthetic silica; and combinations thereof. All of the above fillers can be surface treated with silanes to improve adhesion and dispersion with the polymeric matrix resin. When present, the amount of particulate filler in the polyetherimide film-forming compositions can vary widely, and is that amount effective to provide the desired physical properties. In some instances the particulate filler is present in an amount from 0.1 to 50 vol. %, 0.1 to 40 vol. %, alternatively 5 to 30 vol. %, more particularly 5 to 20 vol. %, each based on the total weight of the film-forming composition.

The polyetherimide film-forming compositions can include various additives incorporated into dielectric substrate polymer compositions, with the proviso that the additives are selected so as to not provide more than 5 wt. % of fluorine, more than 1000 ppm by weight of a silicone, or otherwise do not significantly adversely affect the desired properties of the compositions. In an embodiment, any additives are present in an amount that provides less than 1,000 ppm of a compound having a molecular weight of less than 250 Daltons. Exemplary additives include antioxidants, thermal stabilizers, light stabilizers, ultraviolet light (UV) absorbing additives, quenchers, plasticizers, lubricants, antistatic agents, flame retardants, anti-drip agents, and radiation stabilizers. Combinations of additives can be used. The foregoing additives (except any fillers) are generally present individually in an amount from 0.005 to 20 wt. %, specifically 0.01 to 10 wt. %, based on the total weight of the film-forming composition.

Suitable antioxidants can be compounds such as phosphites, phosphonites, and hindered phenols or mixtures thereof. Phosphorus-containing stabilizers including triaryl phosphites and aryl phosphonates are useful additives. Difunctional phosphorus containing compounds can also be unseeded. Preferred stabilizers can have a molecular weight greater than or equal to 300. Some exemplary compounds are tris-di-tert-butylphenyl phosphite available from Ciba Chemical Co. as IRGAPHOS 168 and bis (2,4-dicumylphenyl) pentaerythritol diphosphite available commercially from Dover Chemical Co. as DOVERPHOS S-9228.

Examples of phosphites and phosphonites include: triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxy pentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol tri-phosphite, tetrakis(2,4-di-tert-butyl-phenyl) 4,4'-biphenylene diphosphonite, bis(2,4-di-tert-butyl-6-methylphenyl) methyl phosphite, bis(2,4-di-tert-butyl-6-methylphenyl) ethyl phosphite, 2,2',2''-nitrilo[triethyl tris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite and 5-butyl-5-ethyl-2-(2,4,6-tri-tert-butylphenoxy)-1,3,2-dioxaphosphirane.

Combinations comprising more than one organophosphorous compound are contemplated. When used in combination the organo phosphorous compounds can be of the same type or different types. For example, a combination can comprise two phosphite or a combination can comprise a phosphite and a phosphonite. In some embodiments, phosphorus-containing stabilizers with a molecular weight greater than or equal to 300 are useful. Phosphorus-containing stabilizers, for example an aryl phosphite are usually present in the composition in an amount from 0.005 to 3 wt.%, specifically 0.01 to 1.0 wt. %, based on total weight of the composition.

Hindered phenols can also be used as antioxidants, for example alkylated monophenols, and alkylated bisphenols or poly phenols. Exemplary alkylated monophenols include 2,6-di-tert-butyl-4-methylphenol; 2-tert-butyl-4,6-dimethylphenol; 2,6-di-tert-butyl-4-ethylphenol; 2,6-di-tert-butyl-4-n-butylphenol; 2,6-di-tert-butyl-4-isobutylphenol; 2,6-dicyclopentyl-4-methylphenol; 2-(alpha-methylcyclohexyl)-4,6-dimethylphenol; 2,6-dioctadecyl-4-methylphenol; 2,4,6-tricyclohexylphenol; 2,6-di-tert-butyl-4-methoxymethylphenol; nonyl phenols which are linear or branched in the side chains, for example, 2,6-di-nonyl-4-methylphenol; 2,4-dimethyl-6-(1'-methylundec-1'-yl)phenol; 2,4-dimethyl-6-(1'-methylheptadec-1'-yl)phenol; 2,4-dimethyl-6-(1'-methyltridec-1'-yl)phenol and mixtures thereof. Exemplary alkylidene bisphenols include 2,2'-methylenebis(6-tert-butyl-4-methylphenol), 2,2'-methylenebis(6-tert-butyl-4-ethylphenol), 2,2'-methylenebis[4-methyl-6-(alpha-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(alpha-methylbenzyl)-4-nonylphenol], 2,2'-methylenebis[6-(alpha, alpha-dimethylbenzyl)-4-nonylphenol], 4,4'-methylenebis-(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane , ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane and mixtures thereof.

The hindered phenol compound can have a molecular weight of greater than or equal to 300 g/mole. The high molecular weight can help retain the hindered phenol moiety in the polymer melt at high processing temperatures, for example greater than or equal to 300°C. Hindered phenol stabilizers, are usually present in the composition in an amount from 0.005 to 2 wt. %, specifically 0.01 to 1.0 wt. %, based on total weight of the composition.

In some embodiments, the polyetherimide film-forming compositions can further optionally include at least one additional amorphous polymer, again with the proviso that the polymers are selected so as to not provide more than 5 wt. % of fluorine or silicon, or otherwise not significantly adversely affect the desired properties of the compositions. Examples of such additional polymers include and are not limited to poly(phenylene sulfone)s, poly(sulfone)s, poly(ether sulfone)s, poly(arylene sulfone), poly(phenylene ether)s, polycarbonates (polycarbonate homopolymers, polycarbonate copolymers, e.g. polyestercarbonate copolymers) as well as blends and co-polymers thereof. When present, the polymer is used in an amount from more than 0 to 12 wt. %, specifically 0.1 to 10 wt. %, more specifically from 0.5 to 5 wt. %, all based on the total weight of the composition. In an embodiment, no polymer other than the polyetherimide is present in the film-forming composition.

The polyetherimide film-forming compositions can be prepared by blending the ingredients under conditions for the formation of an intimate blend. Such conditions often include melt mixing in single or twin screw type extruders, mixing bowl, or similar mixing devices that can apply a shear to the components. Twin-screw extruders are often preferred due to their more intensive mixing capability and self-wiping capability, over single screw extruders. It is often advantageous to apply a vacuum to the blend through at least one vent port in the extruder to remove volatile impurities in the composition. Often it is advantageous to dry the polyetherimide (and/or other additives) prior to melting. The melt processing is often done at 290°C to 340°C to avoid excessive polymer degradation while still allowing sufficient melting to get an intimate polymer mixture free of any unbelted components. The polymer blend can also be melt filtered using a 40 to 100 micrometer candle or screen filter to remove undesirable black specks or other heterogeneous contaminants, for example any particles having a diameter of greater than 1 micrometer.

In an exemplary process, the various components are placed into an extrusion compounder to produce a continuous strand that is cooled and then chopped into pellets. In another procedure, the components are mixed by dry blending, and then fluxed on a mill and comminuted, or extruded and chopped. The composition and any optional components can also be mixed and directly extruded to form a film. In an embodiment, all of the components are freed from as much water as possible. In addition, compounding is carried out to ensure that the residence time in the machine is short, the temperature is carefully controlled, the friction heat is utilized, and an intimate blend between the components is obtained.

The composition can be extruded using extruders conventionally used for thermoplastic compositions using a flat die. The extrusion cast film method involves the melting of the polymer in an extruder, conveying of the molten polymer through a flat die of small lip gap separation, the stretching of the film at relatively high take-up speeds, and the cooling/solidification of the polymer to form the final film. The extruder may be of the single- or twin-screw design, and a melt pump may also be used to provide a constant, non-pulsating flow of polymer through the die. The die lip gap may be as small as 100 to 200 micron, and the take-up rollers may operate at speeds of up to 200 m/min. The design may also include the addition of a heated roll to temper/anneal the film and thus minimize the occurrence of frozen-in internal stresses. The edges of the film are often trimmed, and the film wound up on a roll using a tension-controlled winding mechanism. In some instances, commercial and/or experimentally functionalized fillers can be uniformly dispersed in the polymer prior to stretching the composite material into a thin film. In these cases, the compounding of the filler into the polymeric matrix to obtain a uniform dispersion can be done on a separate extruder or alternatively, and more preferably, on the same extruder used to effect the melting of the polymer prior to the stretching operation. The accuracy of delivering a constant and uniform flow of molten polymer through the die, the rheological properties of the polymer used to make the film, the cleanliness of both resin and equipment, and the mechanical characteristics of the take-up mechanism will all contribute to the successful preparation of these extruded films having relatively small thicknesses.

In an embodiment, the extrusion cast film method is one-step, scalable to larger size equipment, and does not require the use of any solvent. Even for the case of polymers of high molecular weight and/or high glass transition temperature, this extrusion process can be properly designed to provide an environment for the polymer that does not lead to excessive temperatures that can cause the thermal or mechanical degradation of the material. The use of a filtration device for the melt produces a film that is virtually free of contaminants, such as gels and black specks, which would damage the dielectric performance of these films if not properly removed from the melt. The films produced by this method are thin (10 micron in thickness, and even thinner), of uniform thickness across the web, flat with almost no wrinkles or surface waviness, and relatively free of contamination.

The melted composition can be conveyed through the extruder die using a melt pump. In an embodiment, the film is extruded at temperatures from 250°C to 500°C, for example 300°C to 450°C, and the extruded film is uniaxially

stretched to produce the dielectric substrate film. Specifically, the components of the film-forming composition are combined, melted, and intimately mixed, then filtered to remove particles greater than 1 micrometer; extruded through a flat die at the foregoing temperatures; and then uniaxially stretched. After stretching, the film can be directly metallized as described below, or wound on a takeup roll for storage or shipping. The film can have a length of at least 10, or 100 to 10,000 meters, and a width of at least 300, or 300 to 3,000 millimeters. The rate at which the film can be extruded can vary. In commercial embodiments, the rate at which the film can be extruded ranges from 10 lbs (4.5 kg/hr) to 1000 lbs/hr (500 kg/hr). The rate at which the film can pulled from the die plate of the extruder (the takeup speed) can range from 10 meters/minute to 300 meters/minute.

The films can be metallized on at least one side thereof. A variety of metals can be used depending on the intended use of the film, for example copper, aluminum, silver, gold, nickel, zinc, titanium, chromium, vanadium and others. The films are metallized at least on the smooth side, that is, the side having an Ra of less than +/-3% as determined by optical profilometry. Methods for the metallization of polymer films are known, and include, for example, vacuum metal vapor deposition, metal sputtering, plasma treatments, electron beam treatments, chemical oxidation or reduction reactions, as well as electroless wet-chemical deposition. The films can be metallized on both sides by conventional electroless plating. In another embodiment, a patterned metal layer can be formed on a surface of the film, for example by ink jet printing. The thickness of the metallized layer is determined by the intended use of the metallized film, and can be, for example, 1 Angstrom to 1000 nanometers, 500 nanometers, or 10 nanometers. In an embodiment, the thickness of the metal film can be 1 to 3000 Angstrom, 1 to 2820 Angstrom, 1 to 2000 Angstrom, or 1 to 1000 Angstrom. If a conductive metal is used, the resistivity of the metal layer on the polymer film can be from 0.1 to 1000 Ohms per square, or 0.1 to 100 Ohms per square.

The surface of the film to be metallized can be pre-treated, for example by washing, flame treatment, plasma discharge, corona discharge, or the like, for example to enhance adhesion of the metal layer. One or more additional layers can be deposited on the metal layer, for example a clear coat (such as a poly(methyl methacrylate) or poly(ethyl methacrylate) to provide scratch resistance), or another layer of the polyetherimide film to form a laminate.

The films and metallized films thus produced have a variety of advantageous physical properties. The films have at least one region that is wrinkle-free, that is, sufficiently flat and smooth so that when a surface thereof is metallized, the metallized film has an advantageously consistent surface morphology. In an embodiment, the breakdown strength of the un-metallized film is at least 300 Volts/micrometer, alternatively at least 350 Volts/micrometer, alternatively at least 400 Volts/micrometer. In an embodiment, the breakdown strength of the un-metallized film can be up to 520, 530, 540, 550, 560, 570, 580, 590, 600, 610, 620, 630, 640, and 650 Volt/micrometer.

The flatness of the wrinkle-free regions of the films can be determined by measuring the variation in thickness of the film over a specific area. Here, flat films have a variation of the thickness of the film of plus or minus (+/-) 10% or less, alternatively +/-9% or less, +/-8% or less, +/-6% or less, or +/-5% , +/-4%, +/-3%, +/-2%, +/-1% or less, based on the average thickness of the film over the measured area. In an embodiment, the variation in thickness can be as low as +/-1%%.

The smoothness of the wrinkle-free regions of a surface of the films can be quantitated by measuring the surface roughness average ("Ra") of the surface by optical profilometery. Here, the wrinkle-free regions of the films have a surface having an Ra of less than +/-3%, less than /- 2%, or a low as +/- 1% of the average thickness of the film as measured by optical profilometery.

In a particularly advantageous feature, the wrinkle-free regions can be produced over a large area of the film. For example, at least 80%, at least 85%, at least 90%, at least 95%, or at least 97% of area of the film can be wrinkle-free. In another embodiment, the wrinkle-free region can have a contiguous area of at least 1 square meter ($m^2$), at least 2 $m^2$, at least 3 $m^2$, at least 5 $m^2$, at least 10 $m^2$, at least 20 $m^2$, at least 50 $m^2$, or at least 100 $m^2$. The large size of the wrinkle-free regions offers a significant manufacturing advantage, in that the metallized films can be manufactured, stored, and shipped in roll form. Thus, the film can have a length of at least 10 meters, and a width of at least 300 millimeters, wherein at least 80%, at least 85%, at least 90%, at least 95%, or at least 97% of area of the film is the wrinkle-free region. In another embodiment, the film has a length of 100 to 10,000 meters, and a width of 300 to 3,000 millimeters, wherein at least 80%, at least 85%, at least 90%, at least 95%, or at least 97% of area of the film is the wrinkle-free region.

The composition and manufacturing method can be varied to achieve the desired performance properties, in particular electrical properties.

The films can have a high dielectric constant, in particular greater than 2.7, greater than 3.0, or greater than 3.2, 3.3, 3.4, 4.2, 4.3, 4.4, or 4.5, up to 7.0.

The films further can have a dielectric constant that is stable up to the Tg of the polymer that they are made from. Generally, the films are used in environments at a temperature that is lower than the film's polymer's respective Tg, e.g. approximately 20°C lower. In one embodiment, films further can have a dielectric constant that is stable up to 100°C, up to 120°C, up to 140°C, or up to 150°C, or higher up to 200°C, or 310°C.

The films and the metallized films can be essentially solvent-free, that is, contain less than 1,000 ppm, less

than 750 ppm, less than 500 ppm, or less than 250 ppm of a compound having a molecular weight of less than 250 Daltons.

The films and the metallized films can have less than 50 ppm, less than 25 ppm, or less than 10 ppm each of aluminum, calcium, magnesium, iron, nickel, potassium, manganese, molybdenum, sodium, titanium, and zinc in the polyetherimide layer.

The films and the metallized films can have less than 1000 ppm, less than 500 ppm, less than 250 ppm, or less than 100 ppm each of a fluorine-containing compound or a silicone-containing compound.

The films and the metallized films can have no observable specks or gels over an area of at least 3 square meters, or over an area of at least 9 square meters when viewed at a distance of 0.3 meters without magnification.

The films and the metallized films can have no observable voids over an area of at least 3 square meters, or over an area of at least 9 square meters when viewed at a magnification of 50x.

The metallized films can have a dissipation factor, as measured by dielectric spectroscopy, ranging from more than 0 and less than 5%, alternatively more than 0 and less than 4%, alternatively more than 0 and less than 3%, alternatively more than 0 and less than 2%, alternatively more than 0 and less than 1%. In one embodiment, the films have a low dissipation factor, that is, less than 0.1%, or less than 0.08%.

The polyetherimide films can be used in any amorphous film application, but are particularly suitable for metallization. The metallized films can be used in any metallized film application, but are particularly suitable for electrical applications, for example as capacitors or circuit materials. High energy density, high voltage non-polar capacitors can be made using a metalized polymer film that is wound into a cylindrical shape. In a specific embodiment, the polyetherimide film is extruded, then metallized by spraying a conductive metal such as copper or aluminum onto the moving polymer film via vapor deposition in a vacuum chamber, to a thickness from 1 Angstrom to 1000 nanometers, 1 to 3000 Angstrom, or 1 to 1000 Angstrom. The resistivity of the metal on the polymer film can be in a range from about 0.1 Ohm per square to 100 Ohm per square. Before the metallization process is performed, the polymer film can be appropriately masked to provide unmetallized margins at the edges of the width of the film, so that alternate layers of metallized film (when the capacitor is assembled) have unmetallized regions at opposite edges to prevent electrical shorting of the electrodes of the capacitor when the end metallization is ultimately applied.

The capacitors can then be fabricated by rolling two stacked metalized polymer films into a tubular shape. Electrical wires are connected to each metal layer. In a specific embodiment, two separate rolls of the metallized film are placed in a capacitor winder and wound tightly together on a mandrel (which may subsequently be removed) so that the layers are arranged in the sequence polyetherimide/metallized layer/polyetherimide/metallized layer, to replicate a typical construction of a capacitor, i.e., a dielectric with two metallic layers on opposite sides. The two rolls of film are wound with the unmetallized margins on opposite sides.

The extent of winding of the capacitor depends on the physical size of the capacitor desired or on the capacitance desired. Tight winding of the two rolls aids in removing any entrapped air that might otherwise cause premature breakdown. Individual capacitors can be processed in a clean room environment of at least class 100, incorporating HEPA filters, to reduce the likelihood of contamination of the contact point between the dielectric film layers by foreign particles as well as reducing moisture intake in the dielectric. Electric winding can be used to better maintain uniform tension on each capacitor. The capacitor can then be taped at the edges thereof and strapped in a tray open on both sides, to prevent unwinding of the film layers and to allow the edges or ends of the cylinder to be sprayed with a conductive element, for example with a high zinc content solder followed by a regular softer end spray solder of 90% tin, 10% zinc. The first spray scratches the metallized surface and creates a trough to achieve better contact with the metallization on the dielectric film. The combination of end sprays further aids better contact adhesion with the final termination. Subsequently, conductive, e.g., aluminum leads can then be soldered onto each end to form the final termination. One termination can be spot welded to the bottom of the can, while the other termination can be parallel welded to the lid. The capacitor is filled with a liquid impregnate (for example, isopropyl phenyl sulfone), in vacuum filling apparatus, and closed.

In another embodiment, our invention relates to an electronic article comprising the capacitors made from wound metallized uniaxially-stretched extruded film.

Other capacitor configurations are possible. For example, the capacitor can have a flat configuration comprising at least a first and a second electrode disposed in a stacked configuration; and the polyetherimide film disposed between and in at least partial contact with each of the first and second electrodes. Additional polyetherimide films and electrode layers can be present in alternating layers. Thus, a multilayer article for forming an electronic device is within the scope of the present claims, comprising a polyetherimide layer/metal layer/dielectric layer, wherein the dielectric layer can be a polyetherimide film as described herein, or other dielectric material. Additional layers (e.g., additional alternating dielectric/metal layers) can optionally be present.

The following examples are included to provide additional guidance to those skilled in the art of practicing the claims. Accordingly, these examples are not intended to limit the invention in any manner.

EXAMPLES

Materials

The following Examples used polyetherimide polymer (ULTEM 1000, from SABIC INNOVATIVE PLASTICS, and polyetherimide-polydimethylsiloxane polymer (also from SABIC INNOVATIVE PLASTICS). Amounts listed in the Examples are in weight percent, based on the total weight of the composition.

Techniques and procedures

Production of Films and Metallized Films

All components were blended and dried at 250°F (121°C) prior to compounding. The grades were compounded on a 2½-inch (63.5 mm) S-4 single-screw vacuum vented extruder. A barrel temperature profile of 650°F-670°F (343°C - 354°C) and a screw speed of 70-80 rpm were used for extrusion into pellets.

Pellets were dried overnight at 275°F (135°C) prior to extruding as described above to provide the films for metallization.

The thin films are metallized by vapor deposition of aluminum, zinc, or mixtures thereof, or alternatively a foil is merely placed on the film, thereby forming a material suitable for use in a capacitor. The metallized film can be wound on rolls for storage and later processing.

Testing Procedures

Film thickness is measured using a Filmetrics F20 Thin Film Measurement System, manufactured by Filmetrics Inc., San Diego, CA, which employs spectral reflectance to measure a film's thickness by reflecting light off the film and analyzing the reflected light over a range of wavelengths.

Surface roughness is determined using an optical profilometer manufactured by Wyko NT100, operated in the unit's standard operating mode. Measured values are reported under conventional headings such as Ra, Sq, etc., in which "R" indicates that the value was calculated using 2D data and represents linear or profile roughness and "S" indicates that the value was calculated using 3D data and represents surface or area roughness. The second character indicates the formula type used in the calculation, where for example "a" indicates an arithmetic formula and "q" indicates a root mean square formula.

Metal contamination was determined by ICP (Inductibly Coupled Plasma Spectroscopy, which is a known method for measuring metal contanimation).

Dielectric Constant (DK) and Dissipation Factor (DF) were determined using dielectric spectroscopy. Polyetherimide films with very uniform film thickness are used as the test samples. The film thickness d is precisely determined by micrometers or optical thickness gauges (if the film is transparent). Gold or aluminum electrodes with known area A are deposited on both sides of the film sample using sputtering or thermal evaporation. The metallized sample is then loaded into a temperature-controlled chamber and electrically connected with a dielectric spectrum analyzer, such as the Novocontrol Broadband Dielectric Spectrometers. The spectrum analyzer measures the capacitance C and the dissipation factor DF. The DK of the sample is calculated based on the measured capacitance and the area and thickness of the sample: $DK = \frac{Cd}{A\varepsilon_0}$, where $\varepsilon_0$ = 8.85 x$10^{-12}$ F/m, the vacuum permittivity constant.

Dielectric breakdown was determined in accordance with ASTM D-149. A piece of polyetherimide film with uniform thickness is used as the test sample and the thickness is measured using the same method as for the DK and DF measurement. The film sample is tested as a bare film without electrodes deposited on its surface. The film sample is placed between two metal electrodes, where the bottom electrode is a flat copper plate and the top electrode is a stainless steel ball with ¼ inch diameter. During the breakdown measurement, a continuously increasing DC voltage is applied on the sample between the two electrodes, starting from 0V and increasing with a fixed rate of 500V/sec. The DC voltage is applied using a high voltage power supply, such as the Hipotronics DC Power Supply. The voltage increases until dielectric breakdown occurs, which generates large current and causes the power supply to automatically reset through its protection circuits. The highest reached voltage is recorded as the breakdown voltage $V_{BD}$, and the breakdown electric field $E_{BD}$ is determined by dividing $V_{BD}$ by the film thickness *d.* This method was employed unless another method is identified.

In Method 2, small electrodes are used, interrogating the dielectric strength of a limited portion of the film. This method measures the inherent strength of film, which is a material property independent of defects.

In Method 3, larger electrodes are used, interrogating the dielectric strength of a larger portion of the film. This method is believed to be more representative of film behavior in actual capacitors since it takes into consideration defects from material and film processing.

Insulation resistance is measured by a megohm meter with a time tested function, temperature meter, and similar features.

COMPARATIVE EXAMPLES A and B

Samples of 5 micrometer thick (Ex A1) and 7 micrometer thick (Ex A2) extruded polyetherimide films were tested for breakdown strength using Method 1 described above. Results are shown in Table 1.

Table 1

| Ex A1 5 μm | Thickness (μm) | Breakdown Voltage (kVDC) | Breakdown Strength (V/μm) |
|---|---|---|---|
| Mean = | 5.33 | 2.03 | 380 |
| StDev = | 0.26 | 0.38 | 72 |
| % Mean = | 4.86 | 19 | 19 |
| Range = | 1.05 | 1 | 305 |
| Ex A2 7 μm film | Thickness (μm) | Breakdown Voltage (kVDC) | Breakdown Strength (V/μm) |
| Mean = | 7.13 | 3.01 | 421 |
| StDev = | 0.22 | 0.42 | 55 |
| % Mean = | 3.03 | 14 | 14 |
| Range = | 0.85 | 2 | 241 |

Samples of the 5 micrometer thick (Ex B1) and 7 micrometer thick (Ex B2) extruded polyetherimide films were tested for breakdown strength using Method 2 described above. Results are shown in Table 2.

Table 2

| Ex. B1 5 μm film | Thickness (μm) | Breakdown Voltage (kVDC) | Breakdown Strength (V/μm) |
|---|---|---|---|
| Mean = | 5.00 | 0.57 | 114 |
| StDev = | | 0.18 | 36 |
| % Mean | | 31 | 31 |
| Range = | | 1 | 116 |
| Ex. B2 7 μm film | Thickness (μm) | Breakdown Voltage (kVDC) | Breakdown Strength (V/μm) |
| Mean = | 7.00 | 0.86 | 122 |
| StDev = | | 0.37 | 52 |
| Mean = | | 43 | 43 |
| Range = | | 1 | 173 |

Comparative Examples A and B together show that films that demonstrate acceptable performance in Method 1 procedure may have poor performance using the Method 2 procedure. The Method 2 procedure tests over a broader area of film surface and appears better adapted for detecting film defects from material and film processing that may affect performance of the film in a capacitor.

EXAMPLE 1

The polymer resin was melt filtered to remove particulates smaller than 40 microns prior to extruding the 5 μm (Ex. 1A) and 7 μm (Ex. 1B) test films, 590 mm wide x 2000 meters long. Results are shown in Tables 3 and 4.

Table 3

| | Thickness (μm) | | | Breakdown Voltage (V) | | | | Surface Roughness | | | | Property | | | |
|---|---|---|---|---|---|---|---|---|---|---|---|---|---|---|---|
| Film | Ave | Max | Min | Ave | Max | Min | V/μm | Side | Ra | Ry | Rz | | Tensile Strength (Mpa) | Elong. (%) | Tear Strength (N/mm) |
| Ex. 1A | 4.8 | 5.01 | 4.31 | 1389 | 1640 | 960 | 289 | Inner | 0.054 | 0.0628 | 0.419 | MD | 87 | 20 | 129 |
| | | | | | | | | Outer | 0.044 | 0.461 | 0.334 | TD | 86 | 12 | 96 |
| Ex. 1B | 6.85 | 7.32 | 6.42 | 1989 | 2450 | 1410 | 290 | Inner | 0.072 | 0.559 | 0.526 | MD | 89 | 17 | 120 |
| | | | | | | | | Outer | 0.065 | 0.555 | 0.447 | TD | 86 | 14 | 135 |

Table 4. Thickness, measured in micrometers, is reported for Ex 1A and Ex 1B under headings showing Measurement Position from Edge in mm

| | 25 | 55 | 85 | 115 | 145 | 175 | 1205 | 235 | 1265 | 1295 | 1325 | 1355 | 385 | 415 | 445 | 475 | 505 | 535 | 565 |
|---|---|---|---|---|---|---|---|---|---|---|---|---|---|---|---|---|---|---|---|
| Ex 1A | 4.67 | 4.86 | 4.77 | 4.93 | 4.65 | 4.97 | 4.51 | 4.75 | 4.74 | 4.85 | 4.81 | 5.01 | 4.97 | 4.92 | 4.88 | 4.79 | 4.75 | 4.81 | 4.52 |
| Ex 1B | 6.42 | 6.81 | 7.22 | 6.97 | 6.78 | 6.66 | 6.62 | 6.98 | 6.62 | 6.91 | 6.99 | 6.98 | 6.95 | 7.15 | 6.98 | 6.85 | 6.79 | 6.81 | 6.75 |

The data presented in Table 3 demonstrates that melt filtering to remove particulates reduced surface roughness and improved breakdown strength compared to the unfiltered Comparative Examples. Table 4 shows that the filtered samples of Examples 1A and 1B had very consistent film thickness across the web. These properties are directly related to performance of the film as an effective dielectric in capacitors. Variations in dimension/surface roughness can have a negative effect on the quality of surface metallization and is associated with reduced suitability for use in capacitors, especially larger dimension capacitors.

EXAMPLE 2

Films were extruded using melt filtered resin as in Example 1, and then one surface of the film was metallized with aluminum to deposit a layer of approximately 100 Angstroms. The metallized film was incorporated into 0.18μF electrostatic film capacitors by winding and attaching leads. The capacitors were evaluated for conserved capacitance over a range of temperatures and the results are shown in Table 5.

Table 5*

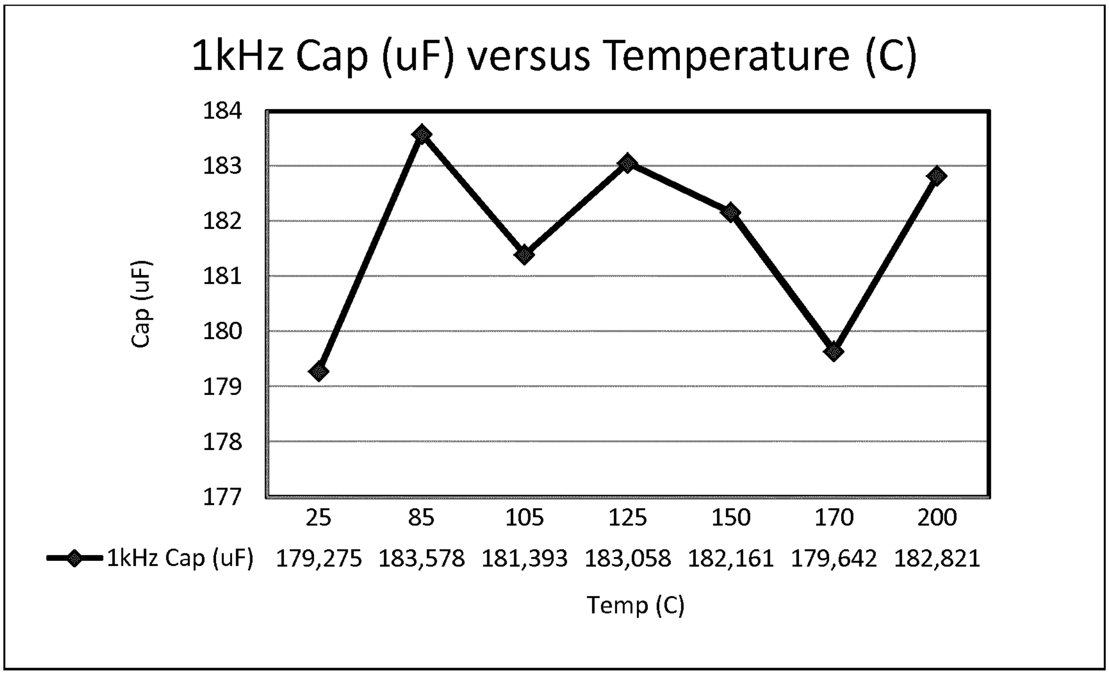


(* 1uf = 100 micro Farads)

The results in Table 5 demonstrate that capacitance is conserved at elevated temperatures.

The capacitor was evaluated for dissipation factor, a measure of the irreversible transformation of electrical energy into heat, according to the method described above, and the results are shown on Table 6.

Table 6

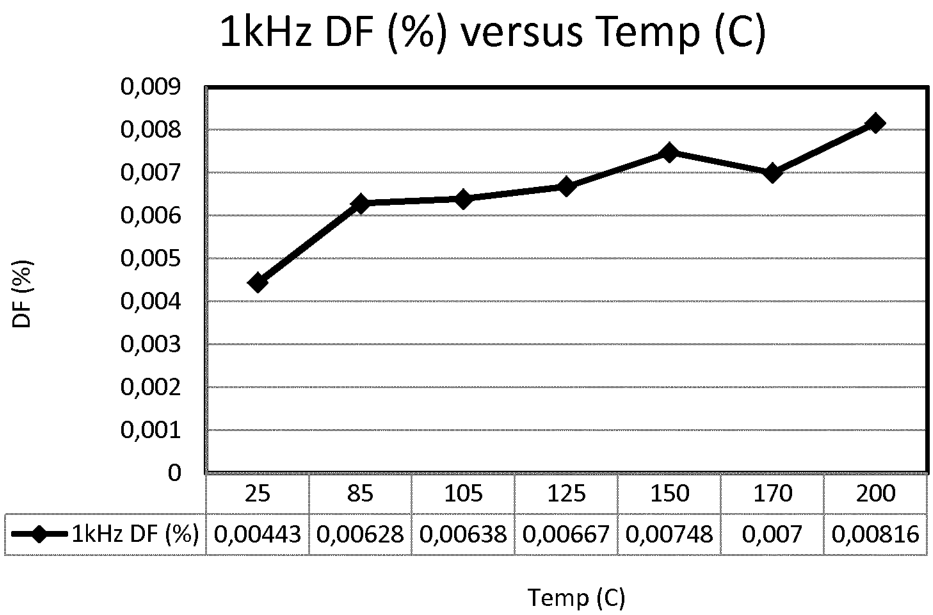


| Temp (C) | 25 | 85 | 105 | 125 | 150 | 170 | 200 |
|---|---|---|---|---|---|---|---|
| 1kHz DF (%) | 0,00443 | 0,00628 | 0,00638 | 0,00667 | 0,00748 | 0,007 | 0,00816 |

The results in Table 6 indicate that the Dissipation Factor is maintained below 1% even at elevated temperatures. Electrical equipment specifications often require a dissipation factor of no more than a specified value, for example an HEV Inverter specification requires a dissipation factor of less than 1%.

The capacitor was tested for insulation resistance, the resistance to leakage current that flows under an applied voltage, over a range of temperatures. Results are shown in Table 7.

Table 7

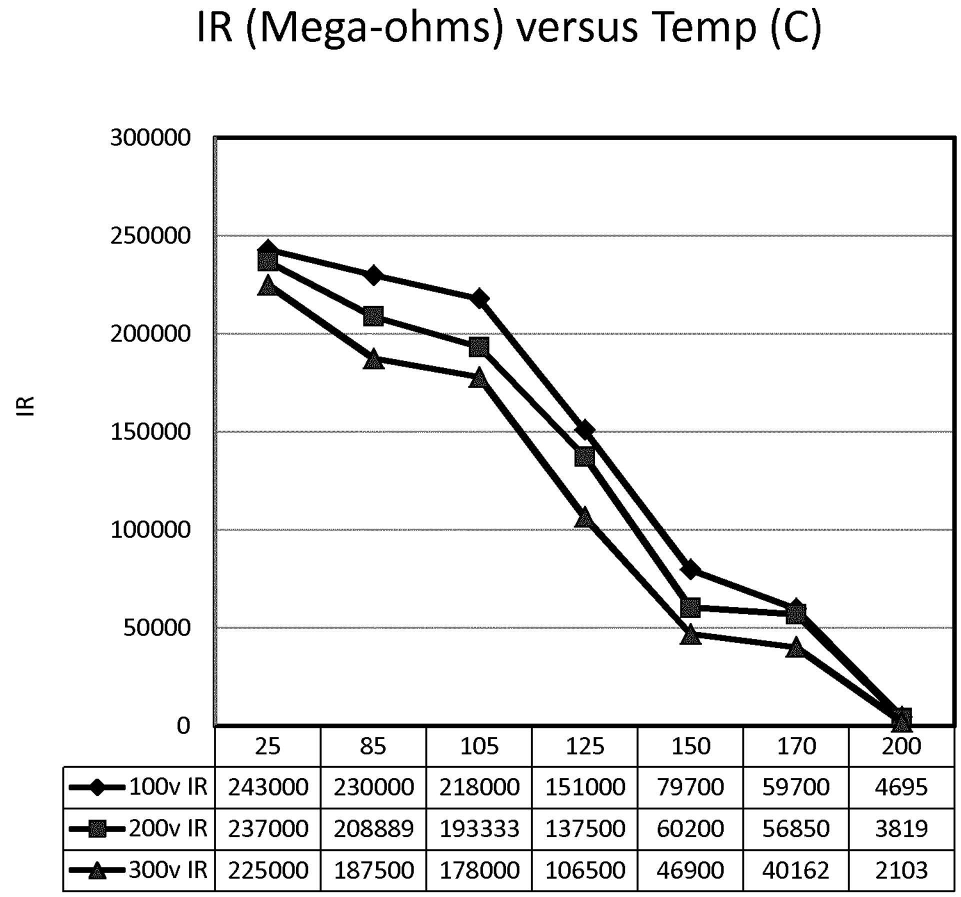


| | 25 | 85 | 105 | 125 | 150 | 170 | 200 |
|---|---|---|---|---|---|---|---|
| 100v IR | 243000 | 230000 | 218000 | 151000 | 79700 | 59700 | 4695 |
| 200v IR | 237000 | 208889 | 193333 | 137500 | 60200 | 56850 | 3819 |
| 300v IR | 225000 | 187500 | 178000 | 106500 | 46900 | 40162 | 2103 |

Temp (C)

The results in Table 7 demonstrate that the insulation resistance remains high up to 170°C and 300VDC.

COMPARATIVE EXAMPLE C

Samples of polyetherimide 5-μm thick films were extruded as sheets 550 mm in width and collected on six rolls 3000 meters in length (Ex. C-1 to Ex. C-6) and one roll of 2900 meters (Ex. C-7). One 7-μm thick film was extruded and is identified as Ex. C-8. The films were valuated for thickness and breakdown voltage and the results are shown in Table 8.

Table 8

| | Thickness | | | | Breakdown Voltage | | | |
|---|---|---|---|---|---|---|---|---|
| | Avg | Max | Min | σ | Avg | Max | Min | σ |
| Ex. C-1 | 4.68 | 4.91 | 4.41 | 0.14 | 280 | 388 | 85 | 78.1 |
| Ex. C -2 | 4.70 | 4.85 | 4.41 | 0.13 | 292 | 433 | 76 | 85.3 |
| Ex. C -3 | 4.78 | 4.94 | 4.61 | 0.11 | 321 | 429 | 131 | 69.5 |
| Ex. C -4 | 4.83 | 5.10 | 4.63 | 0.13 | 323 | 467 | 163 | 70.6 |
| Ex. C -5 | 4.96 | 5.19 | 4.66 | 0.13 | 303 | 431 | 155 | 74.2 |
| Ex. C -6 | 4.91 | 5.12 | 4.56 | 0.14 | 329 | 467 | 213 | 51.5 |
| Ex. C -7 | 4.87 | 5.02 | 4.62 | 0.10 | 327 | 434 | 168 | 67.0 |
| Ex. C -8 | 7.00 | 7.23 | 6.58 | 0.17 | 284 | 404 | 150 | 58.2 |

The data on Table 8 show that these films had relatively consistent thickness. However, the breakdown voltage was highly variable so that the average value fell below 300 on 3 rolls. In addition, there were quality issues noted across the web such that these samples did not exhibit wrinkle-free regions to render these films suitable for metallizing and winding into capacitors. The differences between these examples and those of our invention can be attributed to the fact that these films did not have at least one wrinkle-free region having a first surface and a second surface, the at least one extruded wrinkle-free region comprising: a thickness of more than 0 and less than 7 micrometers, did not have a variation of the thickness of the film of +/-10% or less of the thickness of the film, and did not have a surface roughness average of less than +/- 3% of the average thickness of the film as measured by optical profilometry.

EXAMPLE 3

Samples of polyetherimide 5-μm thick films were extruded as sheets 580 mm in width and collected rolls 3000 meters in length. The film was evaluated for thickness, breakdown voltage and breakdown strength at twenty Sites across the width of the roll. The data are presented in Table 9. A repeat test was conducted and the data are presented in Table 10.

Table 10

| Site # | Thickness (um) | Breakdown Voltage (kVDC) | Breakdown Strength (V/μm) |
|---|---|---|---|
| 1 | 5.42 | 2.94 | 542 |
| 2 | 5.40 | 2.93 | 543 |
| 3 | 5.50 | 2.35 | 428 |
| 4 | 5.37 | 2.95 | 549 |
| 5 | 5.34 | 2.91 | 545 |
| 6 | 5.46 | 2.93 | 537 |
| 7 | 5.44 | 2.93 | 539 |
| 8 | 5.49 | 2.91 | 530 |
| 9 | 5.85 | 2.94 | 503 |
| 10 | 5.62 | 2.88 | 513 |
| 11 | 6.00 | 2.90 | 484 |
| 12 | 5.54 | 2.94 | 531 |
| 13 | 5.50 | 2.93 | 533 |
| 14 | 5.56 | 2.93 | 527 |
| 15 | 5.50 | 2.73 | 496 |
| 16 | 5.58 | 2.92 | 523 |
| 17 | 5.44 | 2.91 | 535 |
| 18 | 5.49 | 2.93 | 534 |
| 19 | 5.52 | 2.51 | 455 |
| 20 | 5.52 | 2.94 | 533 |
| Mean | 5.53 | 2.87 | 519 |
| Standard Deviation | 0.15 | 0.16 | 32 |

Table 10

| Site # | Thickness (μm) | Breakdown Voltage (kVDC) | Breakdown Strength (V/μm) |
|---|---|---|---|
| 1 | 5.67 | 2.93 | 517 |
| 2 | 5.77 | 2.94 | 510 |

(continued)

| Site # | Thickness (μm) | Breakdown Voltage (kVDC) | Breakdown Strength (V/μm) |
|---|---|---|---|
| 3 | 5.80 | 2.93 | 505 |
| 4 | 5.56 | 2.93 | 527 |
| 5 | 5.31 | 2.93 | 551 |
| 6 | 5.07 | 2.77 | 546 |
| 7 | 5.07 | 2.31 | 456 |
| 8 | 5.04 | 2.86 | 567 |
| 9 | 5.22 | 2.84 | 544 |
| 10 | 5.44 | 2.91 | 535 |
| 11 | 5.55 | 2.88 | 519 |
| 12 | 5.84 | 3.01 | 516 |
| 13 | 5.91 | 2.94 | 497 |
| 14 | 5.73 | 2.94 | 513 |
| 15 | 5.75 | 2.94 | 511 |
| 16 | 6.01 | 2.94 | 489 |
| 17 | 5.81 | 2.94 | 506 |
| 18 | 5.38 | 2.92 | 543 |
| 19 | 5.35 | 2.94 | 549 |
| 20 | 5.37 | 2.83 | 527 |
| Mean | 5.53 | 2.88 | 521 |
| Standard Deviation | 0.30 | 0.14 | 26 |

The data in Table 9 show excellent breakdown strength. In addition, wrinkle-free areas were visually observed across the width of the web, which had an overall smooth appearance on the roll. The examples evidence films having relatively high dielectric strength with a very tight standard variation, suggesting that the properties of the film are uniform and excellent properties. Stated differently, the examples evidence films having at least one wrinkle-free region having a first surface and a second surface, the at least one extruded wrinkle-free region comprising: a thickness of more than 0 and less than 7 micrometers, and a variation of the thickness of the film of +/-10% or less of the thickness of the film, and a surface roughness average of less than +/- 3% of the average thickness of the film as measured by optical profilometry; and further wherein the film has: a dielectric constant at 1 kHz and room temperature of at least 2.7; a dissipation factor at 1 kHz and room temperature of 1% or less; and a breakdown strength of at least 300 Volts/micrometer.

## Claims

1. A uniaxially-stretched, solventless extruded film comprising a polyetherimide of the formula

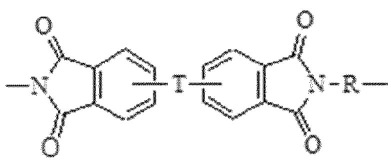

wherein
T is -O- or a group of the formula -O-Z-O- wherein the divalent bonds of the -O- or the - O-Z-O- group are in the

3,3', 3,4', 4,3', or the 4,4' positions and Z is a divalent radical of the formulae

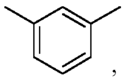, 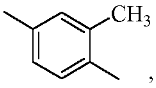, 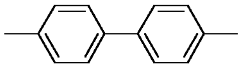, 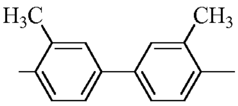, 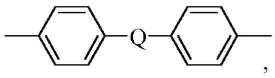,

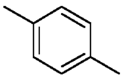, 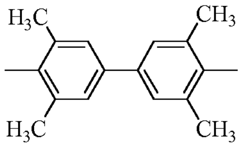, 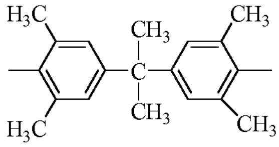, or 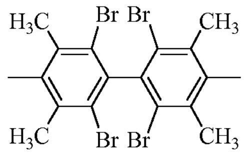,

wherein Q is -O-, -S-, -C(O)-, $-SO_2-$, -SO-, or $-C_yH_{2y}-$ wherein y is an integer from 1 to 5; and R is m-phenylene;
and less than 5 weight percent of fluorine, wherein the film has at least one wrinkle-free region having a surface roughness average of less than +/- 3% of the average thickness of the film as measured by optical profilometry, and having a first surface and a second surface, the at least one extruded wrinkle-free region comprising:

a thickness of less than 7 micrometers, and
a variation of the thickness of the film of +/-10% or less of the thickness of the film, and;

further wherein the film has:

a dielectric constant at 1 kHz and room temperature of at least 2.7;
a dissipation factor at 1 kHz and room temperature of 1% or less; and
a breakdown strength of at least 300 Volts/micrometer.

**2.** The film of claim 1, wherein the film has a length of at least 10 meters, and a width of at least 300 millimeters, and at least 80% of the area of the film is the wrinkle-free region.

**3.** The film of any of the preceding claims, wherein the film has less than 50 ppm each of aluminum, calcium, magnesium, iron, nickel, potassium, manganese, molybdenum, sodium, titanium, and zinc.

**4.** The film of any of the preceding claims, comprising less than 100 ppm of a fluorine-containing compound or a silicone-containing compound.

**5.** The film of any of the preceding claims, wherein the film has no observable specks or gels over an area of at least 3 square meters when viewed at a distance of 0.3 meters without magnification.

**6.** The film of any of the preceding claims, wherein the film has no observable voids over an area of at least 3 square meters when viewed at a magnification of 50x.

**7.** The film of any of the preceding claims, wherein the polyetherimide has a Tg of greater than 135°C.

**8.** The film of any of the preceding claims wound on a roll, wherein the roll has no observable wrinkles or die lines when viewed without magnification at a distance of 0.3 meters.

**9.** An article comprising a portion of the film of any of the preceding claims.

**10.** The article of claim 9, further comprising a layer of a conductive metal deposited on at least a portion of the surface of the wrinkle-free region.

**11.** The article of claim 10, wherein the conductive metal comprises aluminum, zinc, copper, or a combination thereof.

**12.** The article of claim 9 or 10, wherein the conductive metal layer has a thickness of 1 to 3000 angstroms.

**13.** The article of any of claims 9 or 10, wherein the conductive metal layer has a resistivity of 0.1 to 100 Ohms/sq.

**14.** A capacitor comprising a wound metallized film according to any of the preceding claims.

**15.** An electronic article comprising the capacitor of claim 14.

**Patentansprüche**

**1.** Uniaxial gestreckter, lösungsmittelfreier extrudierter Film umfassend ein Polyetherimid der Formel

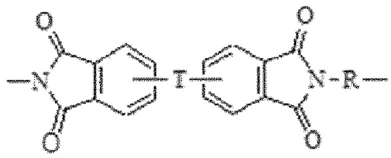

,

wobei
T für -O- oder eine Gruppe der Formel -O-Z-O- steht, wobei die zweiwertigen Bindungen der -O- oder -O-Z-O-Gruppe sich in den Positionen 3,3', 3,4', 4,3' oder 4,4' befinden und Z für einen zweiwertigen Rest der Formel

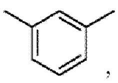 , 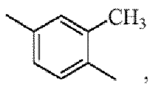 , 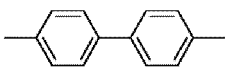 , 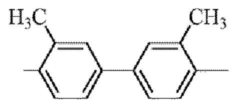 , 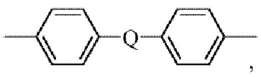 ,

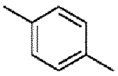 , 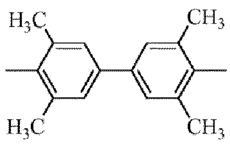 , 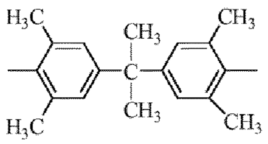 oder 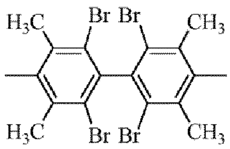 ,

steht, wobei Q für -O-, -S-, -C(O)-, $-SO_2-$, -SO- oder $-C_yH_{2y}-$, wobei y eine ganze Zahl von 1 bis 5 bedeutet, steht; und
R für m-Phenylen steht;
und weniger als 5 Gewichtsprozent Fluor, wobei der Film mindestens einen faltenfreien Bereich mit einem Mittelwert der Oberflächenrauheit von weniger als +/- 3 % der mittleren Dicke des Films bei Messung durch optische Profilometrie und mit einer ersten Oberfläche und einer zweiten Oberfläche aufweist, wobei der mindestens eine extrudierte faltenfreie Bereich Folgendes umfasst:

eine Dicke von weniger als 7 Mikrometern und
eine Variation der Dicke des Films von +/- 10 % oder weniger der Dicke des Films; und
wobei der Film ferner Folgendes aufweist:

eine Dielektrizitätskonstante von mindestens 2,7 bei 1 kHz und Raumtemperatur;
einen Verlustfaktor von 1 % oder weniger bei 1 kHz und Raumtemperatur; und
eine Durchschlagfestigkeit von mindestens 300 Volt/Mikrometer.

**2.** Film nach Anspruch 1, wobei der Film eine Länge von mindestens 10 Metern und eine Breite von mindestens 300 Millimetern aufweist und mindestens 80 % der Fläche des Films den faltenfreien Bereich ausmachen.

**3.** Film nach irgendeinem der vorangehenden Ansprüche, wobei der Film jeweils weniger als 50 ppm Aluminium, Calcium, Magnesium, Eisen, Nickel, Kalium, Mangan, Molybdän, Natrium, Titan und Zink aufweist.

**4.** Film nach irgendeinem der vorangehenden Ansprüche, umfassend weniger als 100 ppm einer fluorhaltigen Verbindung oder einer silikonhaltigen Verbindung.

**5.** Film nach irgendeinem der vorangehenden Ansprüche, wobei der Film keine wahrnehmbaren Unreinheiten oder Gele über eine Fläche von mindestens 3 Quadratmetern aufweist, wenn er aus einem Abstand von 0,3 Metern ohne

Vergrößerung betrachtet wird.

6. Film nach irgendeinem der vorangehenden Ansprüche, wobei der Film keine wahrnehmbaren Hohlräume über eine Fläche von mindestens 3 Quadratmetern aufweist, wenn er bei 50facher Vergrößerung betrachtet wird.

7. Film nach irgendeinem der vorangehenden Ansprüche, wobei das Polyetherimid eine Tg von mehr als 135 °C aufweist.

8. Film nach irgendeinem der vorangehenden Ansprüche, aufgewickelt auf eine Rolle, wobei die Rolle keine wahrnehmbaren Falten oder Düsenlinien aufweist, wenn sie ohne Vergrößerung aus einem Abstand von 0,3 Metern betrachtet wird.

9. Artikel umfassend einen Abschnitt des Films nach irgendeinem der vorangehenden Ansprüche.

10. Artikel nach Anspruch 9, ferner umfassend eine Schicht aus einem leitfähigen Metall, die auf zumindest einen Abschnitt der Oberfläche des faltenfreien Bereichs aufgebracht ist.

11. Artikel nach Anspruch 10, wobei das leitfähige Metall Aluminium, Zink, Kupfer oder eine Kombination davon umfasst.

12. Artikel nach Anspruch 9 oder 10, wobei die leitfähige Metallschicht eine Dicke von 1 bis 3000 Angström aufweist.

13. Artikel nach irgendeinem der Ansprüche 9 oder 10, wobei die leitfähige Metallschicht einen spezifischen Widerstand von 0,1 bis 100 Ohm/Quadrat aufweist.

14. Kondensator umfassend einen aufgewickelten metallbeschichteten Film nach irgendeinem der vorangehenden Ansprüche.

15. Elektronischer Artikel umfassend den Kondensator nach Anspruch 14.

## Revendications

1. Film extrudé sans solvant, étiré de manière uniaxiale, comprenant un polyétherimide de formule

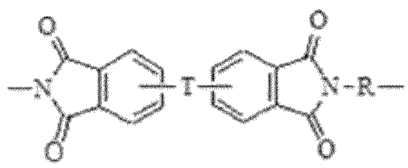

dans laquelle
T est -O- ou un groupe de formule -O-Z-O- dans laquelle les liaisons divalentes du groupe -O- ou du groupe -O-Z-O- sont aux positions 3,3', 3,4', 4,3' ou 4,4' et Z est un radical divalent de formule

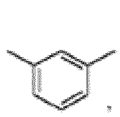 , 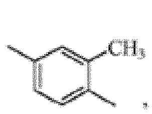 , 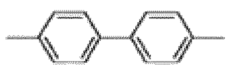 , 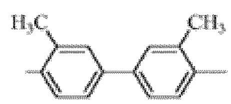 , 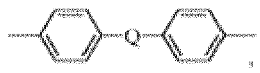 ,

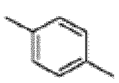 , 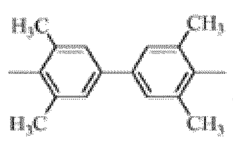 , 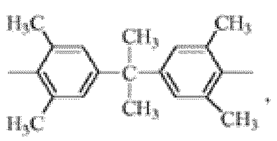 , ou 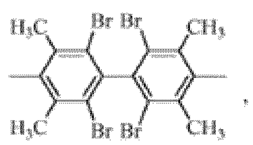 ,

dans laquelle Q est -O-, -S-, -C(O)-, $-SO_2-$, -SO- ou $C_yH_{2y}$- dans laquelle y est un nombre entier compris entre 1 et 5 ; et

R est le m-phénylène ;
et moins de 5 pour cent en poids de fluor, dans lequel le film a au moins une région sans plis ayant une rugosité moyenne de surface de moins de +/-3 % de l'épaisseur moyenne du film telle que mesurée par profilométrie optique, et ayant une première surface et une deuxième surface, la ou les régions extrudées sans plis comprenant :

une épaisseur inférieure à 7 micromètres, et
une variation de l'épaisseur du film de +/- 10 % ou moins de l'épaisseur du film, et ;
dans lequel, en outre, le film présente :

une constante diélectrique à 1 kHz et à température ambiante d'au moins 2,7 ;
un facteur de dissipation à 1 kHz et à température ambiante de 1 % ou moins ; et
une résistance au claquage d'au moins 300 volts/micromètre.

**2.** Film selon la revendication 1, dans lequel le film a une longueur d'au moins 10 mètres, et une largeur d'au moins 300 millimètres, et au moins 80 % de la surface du film est la région sans plis.

**3.** Film selon l'une quelconque des revendications précédentes, dans lequel le film comporte moins de 50 ppm de chacun de l'aluminium, du calcium, du magnésium, du fer, du nickel, du potassium, du manganèse, du molybdène, du sodium, du titane et du zinc.

**4.** Film selon l'une quelconque des revendications précédentes, comprenant moins de 100 ppm d'un composé contenant du fluor ou d'un composé contenant de la silicone.

**5.** Film selon l'une quelconque des revendications précédentes, dans lequel le film ne présente pas de taches ou de gels observables sur une surface d'au moins 3 mètres carrés lorsqu'il est observé à une distance de 0,3 mètre sans grossissement.

**6.** Film selon l'une quelconque des revendications précédentes, dans lequel le film ne présente pas de lacunes observables sur une surface d'au moins 3 mètres carrés lorsqu'il est observé à un grossissement de 50x.

**7.** Film selon l'une quelconque des revendications précédentes, dans lequel le polyétherimide a une Tg supérieure à 135 °C.

**8.** Film selon l'une quelconque des revendications précédentes, enroulé sur un rouleau, dans lequel le rouleau ne présente pas de plis ou de lignes de matrices observables lorsqu'il est observé sans grossissement à une distance de 0,3 mètre.

**9.** Article comprenant une partie du film selon l'une quelconque des revendications précédentes.

**10.** Article selon la revendication 9, comprenant en outre une couche d'un métal conducteur déposée sur au moins une partie de la surface de la région sans plis.

**11.** Article selon la revendication 10, dans lequel le métal conducteur comprend de l'aluminium, du zinc, du cuivre ou une combinaison de ceux-ci.

**12.** Article selon la revendication 9 ou 10, dans lequel la couche de métal conducteur a une épaisseur de 1 à 3 000 angströms.

**13.** Article selon l'une quelconque des revendications 9 ou 10, dans lequel la couche de métal conducteur a une résistivité de 0,1 à 100 Ohms/carré.

**14.** Condensateur comprenant un film métallisé enroulé selon l'une quelconque des revendications précédentes.

**15.** Article électronique comprenant le condensateur selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8020060 A
- US 5229482 A

### Non-patent literature cited in the description

- **IRWIN P C ; TAN D Q ; CAO Y ; SILVI N ; CARTER M ; RUMLER M ; GARET C.** Development of high temperature capacitors for high density, high temperature applications. *SAE INTERNATIONAL JOURNAL OF AEROSPACE,* 01 January 2009, vol. 1 (1), 817-821